# EUROPEAN PATENT APPLICATION

(11) **EP 4 112 572 A1**
(43) Date of publication of application: **04.01.2023**
(21) Application number: 21182166.5
(22) Date of filing: 28.06.2021
(51) Int. Cl.: C03B 37/012, B29D 11/00, C03B 37/027

(54) **METHOD OF PRODUCING PHOTONIC CRYSTAL FIBERS**

(71) Applicant: ASML Netherlands B.V., 5500 AH Veldhoven (NL)
(72) Inventor: RAVENSBERGEN, Janneke, 5500 AH Veldhoven (NL); UEBEL, Patrick Sebastian, 5500 AH Veldhoven (NL); BASELMANS, Johannes Jacobus Matheus, 5500 AH Veldhoven (NL)
(74) Representative: ASML Netherlands B.V.

(57) **Abstract**

A method of producing photonic crystal fibers (PCFs) is disclosed, the method comprising the following steps: 1) obtaining an intermediate PCF having an initial outer fiber diameter of less than 1.0 mm; and 2) elongating the intermediate PCF so as to controllably reduce at least one dimension of the intermediate PCF.

## Description

### FIELD

The present invention relates to a method of producing photonic crystal fibers, in particular hollow-core photonic crystal fibers, and their applications in the manufacture of integrated circuits.

### BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") at a patterning device (e.g., a mask) onto a layer of radiation-sensitive material (resist) provided on a substrate (e.g., a wafer).

To project a pattern on a substrate a lithographic apparatus may use electromagnetic radiation. The wavelength of this radiation determines the minimum size of features which can be formed on the substrate. Typical wavelengths currently in use are 365 nm (i-line), 248 nm, 193 nm and 13.5 nm. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

Low-ki lithography may be used to process features with dimensions smaller than the classical resolution limit of a lithographic apparatus. In such process, the resolution formula may be expressed as CD = k₁×λ/NA, where λ is the wavelength of radiation employed, NA is the numerical aperture of the projection optics in the lithographic apparatus, CD is the "critical dimension" (generally the smallest feature size printed, but in this case half-pitch) and k₁ is an empirical resolution factor. In general, the smaller k₁ the more difficult it becomes to reproduce the pattern on the substrate that resembles the shape and dimensions planned by a circuit designer in order to achieve particular electrical functionality and performance. To overcome these difficulties, sophisticated fine-tuning steps may be applied to the lithographic projection apparatus and/or design layout. These include, for example, but not limited to, optimization of NA, customized illumination schemes, use of phase shifting patterning devices, various optimization of the design layout such as optical proximity correction (OPC, sometimes also referred to as "optical and process correction") in the design layout, or other methods generally defined as "resolution enhancement techniques" (RET). Alternatively, tight control loops for controlling a stability of the lithographic apparatus may be used to improve reproduction of the pattern at low k1.

Metrology tools are used in many aspects of the IC manufacturing process, for example as alignment tools for proper positioning of a substrate prior to an exposure, leveling tools to measure a surface topology of the substrate, for e.g., focus control and scatterometry based tools for inspecting/measuring the exposed and/or etched product in process control. In each case, a radiation source is required. For various reasons, including measurement robustness and accuracy, broadband or white light radiation sources are increasingly used for such metrology applications. It would be desirable to improve on present devices for broadband radiation generation. Among other techniques for white light generation, photonic crystal fibers (PCFs) may be used to convert narrowband input radiation to broadband output radiation via one or more nonlinear optical processes. The output performance of a PCF based radiation source has a strong dependency on the quality and properties of the PCF. PCFs are normally drawn in conventional optical fiber drawing towers which draw a fiber in a continuous manner. The continuous fiber drawing process coupled with more complex fiber structures of PCFs result in high defect rates or low production yields. By way of an example, when drawing a hollow core PCF which is a particular type of PCFs (more details are described in the following paragraphs), the current fiber drawing process tends to result in touching of capillaries of the fiber that are otherwise designed to be separately located around a hollow core of the fiber. Since the fiber drawing process is a continuous process, the entire drawn fiber with touching capillaries will have to be scrapped. Additional fiber loss may also occur when one or more drawing parameters are still to be optimized during fiber drawing. Therefore, a better fiber production method that is able to overcome at least some of the existing problems is desirable.

### SUMMARY

According to a first aspect of the invention, there is provided a method of producing photonic crystal fibers (PCFs), comprising obtaining an intermediate PCF having an initial outer fiber diameter of less than 1.0 mm; and elongating the intermediate PCF so as to controllably reduce at least one dimension of the intermediate PCF.

According to a second aspect of the invention, there is provided a method of producing photonic crystal fibers (PCFs) comprising: obtaining an intermediate PCF; and producing a plurality of PCFs from the intermediate PCF, wherein each PCF is produced by repetitions of: drawing a length of said intermediate PCF to reduce at least one dimension of the said length; and cutting said length from the intermediate PCF when drawn.

According to a third aspect of the invention, there is provided a PCF obtained by performing the method of producing PCFs according to either the first or second aspect of the invention.

Other aspects of the invention comprise metrology device comprising a PCF based broadband light source device comprising a PCF produced by the method of the first or second aspect.

### BRIEF DESCRIPTION OF THE DRAWINGS

Embodiments of the invention will now be described, by way of example only, with reference to the accompanying schematic drawings, in which:
- Figure 1 depicts a schematic overview of a lithographic apparatus;
- Figure 2 depicts a schematic overview of a lithographic cell;
- Figure 3 depicts a schematic representation of holistic lithography, representing a cooperation between three key technologies to optimize semiconductor manufacturing;
- Figure 4 depicts a schematic overview of a scatterometry apparatus used as a metrology device, which may comprise a radiation source according to embodiments of the invention;
- Figure 5 depicts a schematic overview of a level sensor apparatus which may comprise a radiation source according to embodiments of the invention;
- Figure 6 depicts a schematic overview of an alignment sensor apparatus which may comprise a radiation source according to embodiments of the invention;
- Figure 7 is a schematic cross sectional view of a hollow core optical fiber that may form part of a radiation source according to an embodiment in a transverse plane (i.e. perpendicular to an axis of the optical fiber);
- Figure 8 depicts a schematic representation of a radiation source according to an embodiment for providing broadband output radiation;
- Figures 9(a) and 9(b) schematically depict the transverse cross-sections of examples of hollow core photonic crystal fiber (HC-PCF) designs for supercontinuum generation;
- Figures 10(a) - 10(c) show three transverse cross-section images taken respectively at three fiber drawing stages and corresponding to a preform, a cane and a HC-PCF;
- Figure 11 shows a flowchart of the method of producing PCFs in accordance with an embodiment;
- Figure 12 schematically depicts an optical fiber drawing apparatus that can be used with the method shown in Figure 11, in accordance with an embodiment;
- Figure 13 schematically depicts an example way of connecting a pressure supply (e.g., a vacuum pump) to an intermediate HC-PCF so as to controllably change the fiber's internal structures (e.g., capillaries); and
- Figure 14 depicts a block diagram of a computer system for controlling a broadband radiation source.

### DETAILED DESCRIPTION

In the present document, the terms "radiation" and "beam" are used to encompass all types of electromagnetic radiation, including ultraviolet radiation (e.g. with a wavelength of 365, 248, 193, 157 or 126 nm) and EUV (extreme ultra-violet radiation, e.g. having a wavelength in the range of about 5-100 nm).

The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective, binary, phase-shifting, hybrid, etc.), examples of other such patterning devices include a programmable mirror array and a programmable LCD array.

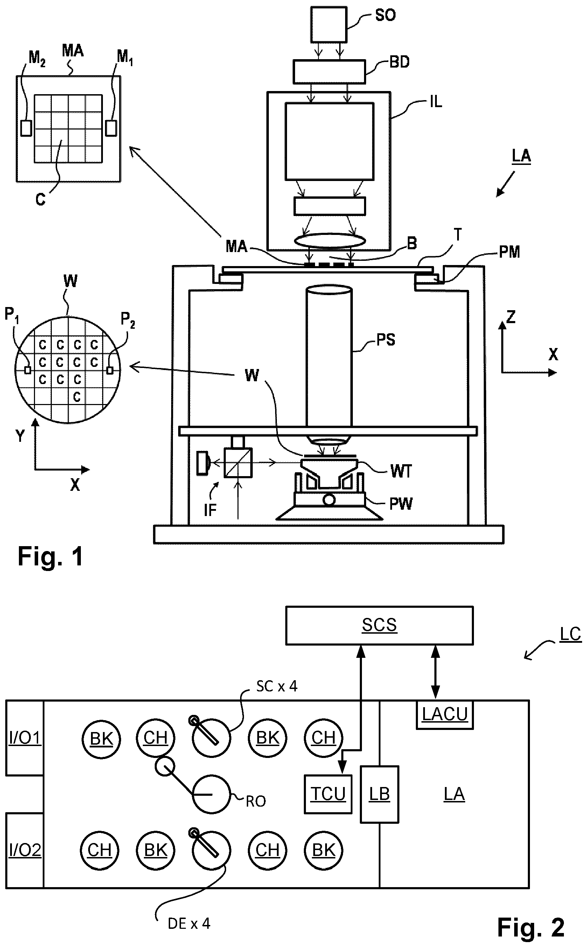

Figure 1 schematically depicts a lithographic apparatus LA. The lithographic apparatus LA includes an illumination system (also referred to as illuminator) IL configured to condition a radiation beam B (e.g., UV radiation, DUV radiation or EUV radiation), a mask support (e.g., a mask table) MT constructed to support a patterning device (e.g., a mask) MA and connected to a first positioner PM configured to accurately position the patterning device MA in accordance with certain parameters, a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system IL receives a radiation beam from a radiation source SO, e.g. via a beam delivery system BD. The illumination system IL may include various types of optical components, such as refractive, reflective, magnetic, electromagnetic, electrostatic, and/or other types of optical components, or any combination thereof, for directing, shaping, and/or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g., water, so as to fill a space between the projection system PS and the substrate W - which is also referred to as immersion lithography. More information on immersion techniques is given in US6952253, which is incorporated herein by reference.

The lithographic apparatus LA may also be of a type having two or more substrate supports WT (also named "dual stage"). In such "multiple stage" machine, the substrate supports WT may be used in parallel, and/or steps in preparation of a subsequent exposure of the substrate W may be carried out on the substrate W located on one of the substrate support WT while another substrate W on the other substrate support WT is being used for exposing a pattern on the other substrate W.

In addition to the substrate support WT, the lithographic apparatus LA may comprise a measurement stage. The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid. The measurement stage may move beneath the projection system PS when the substrate support WT is away from the projection system PS.

In operation, the radiation beam B is incident on the patterning device, e.g. mask, MA which is held on the mask support MT, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks PI, P2. Although the substrate alignment marks PI, P2 as illustrated occupy dedicated target portions, they may be located in spaces between target portions. Substrate alignment marks PI, P2 are known as scribe-lane alignment marks when these are located between the target portions C.

As shown in Figure 2 the lithographic apparatus LA may form part of a lithographic cell LC, also sometimes referred to as a lithocell or (litho)cluster, which often also includes apparatus to perform pre- and post-exposure processes on a substrate W. Conventionally these include spin coaters SC to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/O1, I/O2, moves them between the different process apparatus and delivers the substrates W to the loading bay LB of the lithographic apparatus LA. The devices in the lithocell, which are often also collectively referred to as the track, are typically under the control of a track control unit TCU that in itself may be controlled by a supervisory control system SCS, which may also control the lithographic apparatus LA, e.g. via lithography control unit LACU.

In order for the substrates W exposed by the lithographic apparatus LA to be exposed correctly and consistently, it is desirable to inspect substrates to measure properties of patterned structures, such as overlay errors between subsequent layers, line thicknesses, critical dimensions (CD), etc. For this purpose, inspection tools (not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus, which may also be referred to as a metrology apparatus, is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semi-latent image (image in a resist layer after a post-exposure bake step PEB), or on a developed resist image (in which the exposed or unexposed parts of the resist have been removed), or even on an etched image (after a pattern transfer step such as etching).

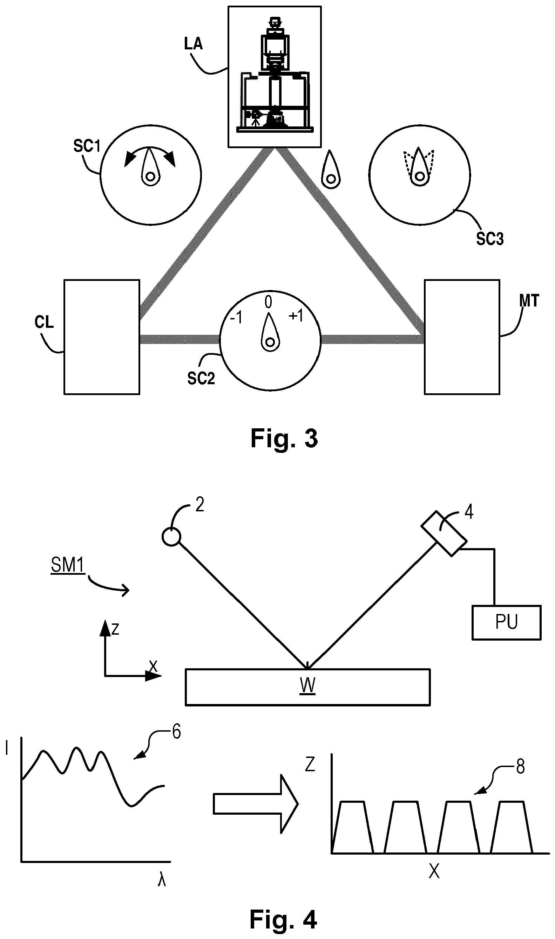

Typically the patterning process in a lithographic apparatus LA is one of the most critical steps in the processing which requires high accuracy of dimensioning and placement of structures on the substrate W. To ensure this high accuracy, three systems may be combined in a so called "holistic" control environment as schematically depicted in Fig. 3. One of these systems is the lithographic apparatus LA which is (virtually) connected to a metrology tool MT (a second system) and to a computer system CL (a third system). The key of such "holistic" environment is to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific manufacturing process yields a defined result (e.g. a functional semiconductor device) - typically within which the process parameters in the lithographic process or patterning process are allowed to vary.

The computer system CL may use (part of) the design layout to be patterned to predict which resolution enhancement techniques to use and to perform computational lithography simulations and calculations to determine which mask layout and lithographic apparatus settings achieve the largest overall process window of the patterning process (depicted in Fig. 3 by the double arrow in the first scale SC1). Typically, the resolution enhancement techniques are arranged to match the patterning possibilities of the lithographic apparatus LA. The computer system CL may also be used to detect where within the process window the lithographic apparatus LA is currently operating (e.g. using input from the metrology tool MT) to predict whether defects may be present due to e.g. sub-optimal processing (depicted in Fig. 3 by the arrow pointing "0" in the second scale SC2).

The metrology tool MT may provide input to the computer system CL to enable accurate simulations and predictions, and may provide feedback to the lithographic apparatus LA to identify possible drifts, e.g. in a calibration status of the lithographic apparatus LA (depicted in Fig. 3 by the multiple arrows in the third scale SC3).

In lithographic processes, it is desirable to make frequently measurements of the structures created, e.g., for process control and verification. Tools to make such measurement are typically called metrology tools MT. Different types of metrology tools MT for making such measurements are known, including scanning electron microscopes or various forms of scatterometer metrology tools MT. Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers may measure gratings using light from soft x-ray and visible to near-IR wavelength range.

In a first embodiment, the scatterometer MT is an angular resolved scatterometer. In such a scatterometer reconstruction methods may be applied to the measured signal to reconstruct or calculate properties of the grating. Such reconstruction may, for example, result from simulating interaction of scattered radiation with a mathematical model of the target structure and comparing the simulation results with those of a measurement. Parameters of the mathematical model are adjusted until the simulated interaction produces a diffraction pattern similar to that observed from the real target.

In a second embodiment, the scatterometer MT is a spectroscopic scatterometer MT. In such spectroscopic scatterometer MT, the radiation emitted by a radiation source is directed onto the target and the reflected or scattered radiation from the target is directed to a spectrometer detector, which measures a spectrum (i.e. a measurement of intensity as a function of wavelength) of the specular reflected radiation. From this data, the structure or profile of the target giving rise to the detected spectrum may be reconstructed, e.g. by Rigorous Coupled Wave Analysis and non-linear regression or by comparison with a library of simulated spectra.

In a third embodiment, the scatterometer MT is an ellipsometric scatterometer. The ellipsometric scatterometer allows for determining parameters of a lithographic process by measuring scattered radiation for each polarization states. Such metrology apparatus emits polarized light (such as linear, circular, or elliptic) by using, for example, appropriate polarization filters in the illumination section of the metrology apparatus. A source suitable for the metrology apparatus may provide polarized radiation as well. Various embodiments of existing ellipsometric scatterometers are described in US patent applications 11/451,599, 11/708,678, 12/256,780, 12/486,449, 12/920,968, 12/922,587, 13/000,229, 13/033,135, 13/533,110 and 13/891,410 incorporated herein by reference in their entirety.

In one embodiment of the scatterometer MT, the scatterometer MT is adapted to measure the overlay of two misaligned gratings or periodic structures by measuring asymmetry in the reflected spectrum and/or the detection configuration, the asymmetry being related to the extent of the overlay. The two (typically overlapping) grating structures may be applied in two different layers (not necessarily consecutive layers), and may be formed substantially at the same position on the wafer. The scatterometer may have a symmetrical detection configuration as described e.g. in co-owned patent application EP1,628,164A, such that any asymmetry is clearly distinguishable. This provides a straightforward way to measure misalignment in gratings. Further examples for measuring overlay error between the two layers containing periodic structures as target is measured through asymmetry of the periodic structures may be found in PCT patent application publication no. WO 2011/012624 or US patent application US 20160161863, incorporated herein by reference in its entirety.

Other parameters of interest may be focus and dose. Focus and dose may be determined simultaneously by scatterometry (or alternatively by scanning electron microscopy) as described in US patent application US2011-0249244, incorporated herein by reference in its entirety. A single structure may be used which has a unique combination of critical dimension and sidewall angle measurements for each point in a focus energy matrix (FEM - also referred to as Focus Exposure Matrix). If these unique combinations of critical dimension and sidewall angle are available, the focus and dose values may be uniquely determined from these measurements.

A metrology target may be an ensemble of composite gratings, formed by a lithographic process, mostly in resist, but also after etch process for example. Typically the pitch and line-width of the structures in the gratings strongly depend on the measurement optics (in particular the NA of the optics) to be able to capture diffraction orders coming from the metrology targets. As indicated earlier, the diffracted signal may be used to determine shifts between two layers (also referred to 'overlay') or may be used to reconstruct at least part of the original grating as produced by the lithographic process. This reconstruction may be used to provide guidance of the quality of the lithographic process and may be used to control at least part of the lithographic process. Targets may have smaller sub-segmentation which are configured to mimic dimensions of the functional part of the design layout in a target. Due to this sub-segmentation, the targets will behave more similar to the functional part of the design layout such that the overall process parameter measurements resembles the functional part of the design layout better. The targets may be measured in an underfilled mode or in an overfilled mode. In the underfilled mode, the measurement beam generates a spot that is smaller than the overall target. In the overfilled mode, the measurement beam generates a spot that is larger than the overall target. In such overfilled mode, it may also be possible to measure different targets simultaneously, thus determining different processing parameters at the same time.

Overall measurement quality of a lithographic parameter using a specific target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016-0161863 and published US patent application US 2016/0370717A1 incorporated herein by reference in its entirety.

A metrology apparatus, such as a scatterometer, is depicted in Figure 4. It comprises a broadband (white light) radiation projector 2 which projects radiation onto a substrate 6. The reflected or scattered radiation is passed to a spectrometer detector 4, which measures a spectrum 10 (i.e. a measurement of intensity as a function of wavelength) of the specular reflected radiation. From this data, the structure or profile giving rise to the detected spectrum may be reconstructed by processing unit PU, e.g. by Rigorous Coupled Wave Analysis and non-linear regression or by comparison with a library of simulated spectra as shown at the bottom of Figure 3. In general, for the reconstruction, the general form of the structure is known and some parameters are assumed from knowledge of the process by which the structure was made, leaving only a few parameters of the structure to be determined from the scatterometry data. Such a scatterometer may be configured as a normal-incidence scatterometer or an oblique-incidence scatterometer.

Overall measurement quality of a lithographic parameter via measurement of a metrology target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016/0161863 and published US patent application US 2016/0370717A1incorporated herein by reference in its entirety.

Another type of metrology tool used in IC manufacture is a topography measurement system, level sensor or height sensor. Such a tool may be integrated in the lithographic apparatus, for measuring a topography of a top surface of a substrate (or wafer). A map of the topography of the substrate, also referred to as height map, may be generated from these measurements indicating a height of the substrate as a function of the position on the substrate. This height map may subsequently be used to correct the position of the substrate during transfer of the pattern on the substrate, in order to provide an aerial image of the patterning device in a properly focus position on the substrate. It will be understood that "height" in this context refers to a dimension broadly out of the plane to the substrate (also referred to as Z-axis). Typically, the level or height sensor performs measurements at a fixed location (relative to its own optical system) and a relative movement between the substrate and the optical system of the level or height sensor results in height measurements at locations across the substrate.

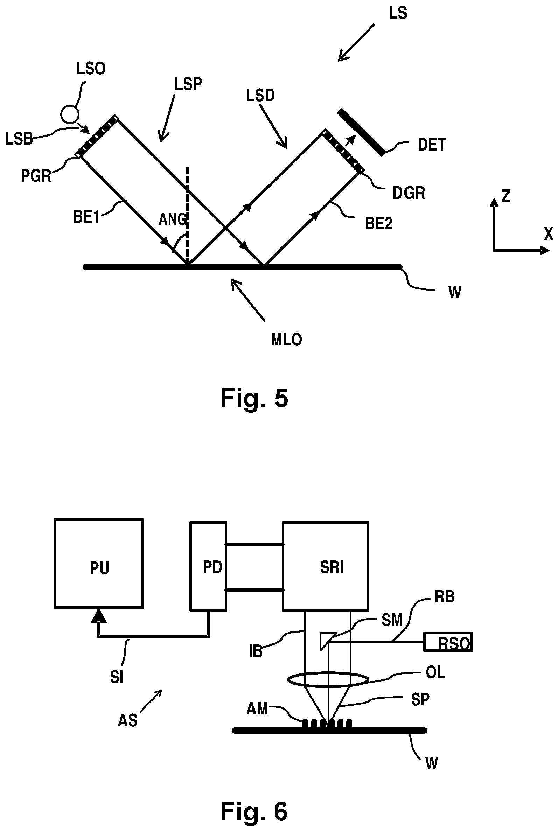

An example of a level or height sensor LS as known in the art is schematically shown in Figure 5, which illustrates only the principles of operation. In this example, the level sensor comprises an optical system, which includes a projection unit LSP and a detection unit LSD. The projection unit LSP comprises a radiation source LSO providing a beam of radiation LSB which is imparted by a projection grating PGR of the projection unit LSP. The radiation source LSO may be, for example, a narrowband or broadband light source, such as a supercontinuum light source, polarized or non-polarized, pulsed or continuous, such as a polarized or non-polarized laser beam. The radiation source LSO may include a plurality of radiation sources having different colors, or wavelength ranges, such as a plurality of LEDs. The radiation source LSO of the level sensor LS is not restricted to visible radiation, but may additionally or alternatively encompass UV and/or IR radiation and any range of wavelengths suitable to reflect from a surface of a substrate.

The projection grating PGR is a periodic grating comprising a periodic structure resulting in a beam of radiation BE1 having a periodically varying intensity. The beam of radiation BE1 with the periodically varying intensity is directed towards a measurement location MLO on a substrate W having an angle of incidence ANG with respect to an axis perpendicular (Z-axis) to the incident substrate surface between 0 degrees and 90 degrees, typically between 70 degrees and 80 degrees. At the measurement location MLO, the patterned beam of radiation BE1 is reflected by the substrate W (indicated by arrows BE2) and directed towards the detection unit LSD.

In order to determine the height level at the measurement location MLO, the level sensor further comprises a detection system comprising a detection grating DGR, a detector DET and a processing unit (not shown) for processing an output signal of the detector DET. The detection grating DGR may be identical to the projection grating PGR. The detector DET produces a detector output signal indicative of the light received, for example indicative of the intensity of the light received, such as a photodetector, or representative of a spatial distribution of the intensity received, such as a camera. The detector DET may comprise any combination of one or more detector types.

By means of triangulation techniques, the height level at the measurement location MLO can be determined. The detected height level is typically related to the signal strength as measured by the detector DET, the signal strength having a periodicity that depends, amongst others, on the design of the projection grating PGR and the (oblique) angle of incidence ANG.

The projection unit LSP and/or the detection unit LSD may include further optical elements, such as lenses and/or mirrors, along the path of the patterned beam of radiation between the projection grating PGR and the detection grating DGR (not shown).

In an embodiment, the detection grating DGR may be omitted, and the detector DET may be placed at the position where the detection grating DGR is located. Such a configuration provides a more direct detection of the image of the projection grating PGR.

In order to cover the surface of the substrate W effectively, a level sensor LS may be configured to project an array of measurement beams BE1 onto the surface of the substrate W, thereby generating an array of measurement areas MLO or spots covering a larger measurement range.

Various height sensors of a general type are disclosed for example in US7265364 and US7646471, both incorporated by reference. A height sensor using UV radiation instead of visible or infrared radiation is disclosed in US2010233600A1, incorporated by reference. In WO2016102127A1, incorporated by reference, a compact height sensor is described which uses a multi-element detector to detect and recognize the position of a grating image, without needing a detection grating.

Another type of metrology tool used in IC manufacture is an alignment sensor. A critical aspect of performance of the lithographic apparatus is therefore the ability to place the applied pattern correctly and accurately in relation to features laid down in previous layers (by the same apparatus or a different lithographic apparatus). For this purpose, the substrate is provided with one or more sets of marks or targets. Each mark is a structure whose position can be measured at a later time using a position sensor, typically an optical position sensor. The position sensor may be referred to as "alignment sensor" and marks may be referred to as "alignment marks".

A lithographic apparatus may include one or more (e.g. a plurality of) alignment sensors by which positions of alignment marks provided on a substrate can be measured accurately. Alignment (or position) sensors may use optical phenomena such as diffraction and interference to obtain position information from alignment marks formed on the substrate. An example of an alignment sensor used in current lithographic apparatus is based on a self-referencing interferometer as described in US6961116. Various enhancements and modifications of the position sensor have been developed, for example as disclosed in US2015261097A1. The contents of all of these publications are incorporated herein by reference.

Figure 6 is a schematic block diagram of an embodiment of a known alignment sensor AS, such as is described, for example, in US6961116, and which is incorporated by reference. Radiation source RSO provides a beam RB of radiation of one or more wavelengths, which is diverted by diverting optics onto a mark, such as mark AM located on substrate W, as an illumination spot SP. In this example the diverting optics comprises a spot mirror SM and an objective lens OL. The illumination spot SP, by which the mark AM is illuminated, may be slightly smaller in diameter than the width of the mark itself.

Radiation diffracted by the alignment mark AM is collimated (in this example via the objective lens OL) into an information-carrying beam IB. The term "diffracted" is intended to include zero-order diffraction from the mark (which may be referred to as reflection). A self-referencing interferometer SRI, e.g. of the type disclosed in US6961116 mentioned above, interferes the beam IB with itself after which the beam is received by a photodetector PD. Additional optics (not shown) may be included to provide separate beams in case more than one wavelength is created by the radiation source RSO. The photodetector may be a single element, or it may comprise a number of pixels, if desired. The photodetector may comprise a sensor array.

The diverting optics, which in this example comprises the spot mirror SM, may also serve to block zero order radiation reflected from the mark, so that the information-carrying beam IB comprises only higher order diffracted radiation from the mark AM (this is not essential to the measurement, but improves signal to noise ratios).

Intensity signals SI are supplied to a processing unit PU. By a combination of optical processing in the block SRI and computational processing in the unit PU, values for X- and Y-position on the substrate relative to a reference frame are output.

A single measurement of the type illustrated only fixes the position of the mark within a certain range corresponding to one pitch of the mark. Coarser measurement techniques are used in conjunction with this to identify which period of a sine wave is the one containing the marked position. The same process at coarser and/or finer levels may be repeated at different wavelengths for increased accuracy and/or for robust detection of the mark irrespective of the materials from which the mark is made, and materials on and/or below which the mark is provided. The wavelengths may be multiplexed and demultiplexed optically so as to be processed simultaneously, and/or they may be multiplexed by time division or frequency division.

In this example, the alignment sensor and spot SP remain stationary, while it is the substrate W that moves. The alignment sensor can thus be mounted rigidly and accurately to a reference frame, while effectively scanning the mark AM in a direction opposite to the direction of movement of substrate W. The substrate W is controlled in this movement by its mounting on a substrate support and a substrate positioning system controlling the movement of the substrate support. A substrate support position sensor (e.g. an interferometer) measures the position of the substrate support (not shown). In an embodiment, one or more (alignment) marks are provided on the substrate support. A measurement of the position of the marks provided on the substrate support allows the position of the substrate support as determined by the position sensor to be calibrated (e.g. relative to a frame to which the alignment system is connected). A measurement of the position of the alignment marks provided on the substrate allows the position of the substrate relative to the substrate support to be determined.

Metrology tools MT, such as a scatterometer, topography measurement system, or position measurement system mentioned above may use radiation originating from a radiation source to perform a measurement. The properties of the radiation used by a metrology tool may affect the type and quality of measurements that may be performed. For some applications, it may be advantageous to use multiple radiation frequencies to measure a substrate, for example broadband radiation may be used. Multiple different frequencies may be able to propagate, irradiate, and scatter off a metrology target with no or minimal interference with other frequencies. Therefore different frequencies may for example be used to obtain more metrology data simultaneously. Different radiation frequencies may also be able to interrogate and discover different properties of a metrology target. Broadband radiation may be useful in metrology systems MT such as for example level sensors, alignment mark measurement systems, scatterometry tools, or inspection tools. A broadband radiation source may be a supercontinuum source.

High quality broadband radiation, for example supercontinuum radiation, may be difficult to generate. One method for generating broadband radiation may be to broaden high-power narrow band or single frequency input radiation or pump radiation, for example making use of non-linear, higher order effects. The input radiation (which may be produced using a laser) may be referred to as pump radiation. Alternatively, the input radiation may be referred to as seed radiation. To obtain high power radiation for broadening effects, radiation may be confined into a small area so that strongly localised high intensity radiation is achieved. In those areas, the radiation may interact with broadening structures and/or materials forming a non-linear medium so as to create broadband output radiation. In the high intensity radiation areas, different materials and/or structures may be used to enable and/or improve radiation broadening by providing a suitable non-linear medium.

In some implementations, the broadband output radiation is created in a photonic crystal fiber (PCF). In several embodiments, such a photonic crystal fiber has microstructures around its fiber core assisting in confining radiation that travels through the fiber in the fiber core. The fiber core can be made of a solid material that has non-linear properties and that is capable of generating broadband radiation when high intensity pump radiation is transmitted through the fiber core. Although it is feasible to generate broadband radiation in solid core photonic crystal fibers, there may be a few disadvantages of using a solid material. For example, if UV radiation is generated in the solid core, this radiation might not be present in the output spectrum of the fiber because the radiation is absorbed by most solid material.

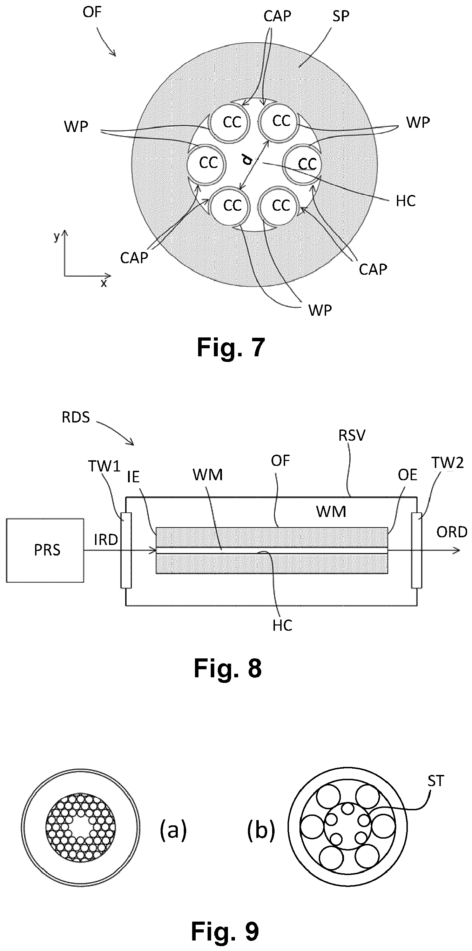

In some implementations, as discussed further below with reference to Figure 8, methods and apparatus for broadening input radiation may use a fiber for confining input radiation, and for broadening the input radiation to output broadband radiation. The fiber may be a hollow core fiber, and may comprise internal structures to achieve effective guiding and confinement of radiation in the fiber. The fiber may be a hollow core photonic crystal fiber (HC-PCF), which is particularly suitable for strong radiation confinement, predominantly inside the hollow core of the fiber, achieving high radiation intensities. The hollow core of the fiber may be filled with a gas acting as a broadening medium for broadening input radiation. Such a fiber and gas arrangement may be used to create a supercontinuum radiation source. Radiation input to the fiber may be electromagnetic radiation, for example radiation in one or more of the infrared, visible, UV, and extreme UV spectra. The output radiation may consist of or comprise broadband radiation, which may be referred to herein as white light.

Some embodiments relate to a new design of such a broadband radiation source comprising an optical fiber. The optical fiber is a hollow-core, photonic crystal fiber (HC-PCF). In particular, the optical fiber may be a hollow-core, photonic crystal fiber of a type comprising anti-resonant structures for confinement of radiation. Such fibers comprising anti-resonant structures are known in the art as anti-resonant fibers, tubular fibers, single-ring fibers, negative curvature fibers or inhibited coupling fibers. Various different designs of such fibers are known in the art. Alternatively, the optical fiber may be photonic bandgap fibers (HC-PBFs, for example a Kagome fiber).

A number of types of HC-PCFs can be engineered, each based on a different physical guidance mechanism. Two such HC-PCFs include: hollow-core photonic bandgap fibers (HC-PBFs) and hollow-core anti-resonant reflecting fibers (HC-ARFs). Detail on the design and manufacture of HC-PCFs can be found in US patent US2004/015085A1 (for HC-PBFs) and International PCT patent application WO2017/032454A1 (for Hollow Core anti-resonant reflecting fibers), which are incorporated herein by reference. Figure 9(a) shows a Kagome fiber, comprising a Kagome lattice structure.

An example of an optical fiber for use in the radiation source is now described with reference to Figure 7, which is a schematic cross sectional view of the optical fiber OF in a transverse plane. Further embodiments similar to the practical example of the fiber of Figure 7 are disclosed in WO2017/032454A1.

The optical fiber OF comprises an elongate body, which is longer in one dimension compared to the other two dimensions of the fiber OF. This longer dimension may be referred to as an axial direction and may define an axis of the optical fiber OF. The two other dimensions define a plane which may be referred to as a transverse plane. Figure 7 shows a cross-section of the optical fiber OF in this transverse plane (i.e. perpendicular to the axis), which is labelled as the x-y plane. The transverse cross-section of the optical fiber OF may be substantially constant along the fiber axis.

It will be appreciated that the optical fiber OF has some degree of flexibility and therefore the direction of the axis will not, in general, be uniform along the length of the optical fiber OF. The terms such as the optical axis, the transverse cross-section and the like will be understood to mean the local optical axis, the local transverse cross-section and so on. Furthermore, where components are described as being cylindrical or tubular these terms will be understood to encompass such shapes that may have been distorted as the optical fiber OF is flexed.

The optical fiber OF may have any length and it will be appreciated that the length of the optical fiber OF may be dependent on the application. The optical fiber OF may have a length between 1 centimeter (cm) and 10 meter (m), for example, the optical fiber OF may have a length between 10 cm and 100 cm.

The optical fiber OF comprises: a hollow core HC; a cladding portion surrounding the hollow core HC; and a support portion SP surrounding and supporting the cladding portion. The optical fiber OF may be considered to comprise a body (comprising the cladding portion and the support portion SP) having a hollow core HC. The cladding portion comprises a plurality of anti-resonance elements for guiding radiation through the hollow core HC. In particular, the plurality of anti-resonance elements are arranged to confine radiation that propagates through the optical fiber OF predominantly inside the hollow core HC and to guide the radiation along the optical fiber OF. The hollow core HC of the optical fiber OF may be disposed substantially in a central region of the optical fiber OF, so that the axis of the optical fiber OF may also define an axis of the hollow core HC of the optical fiber OF.

The cladding portion comprises a plurality of anti-resonance elements for guiding radiation propagating through the optical fiber OF. In particular, in this embodiment, the cladding portion comprises a single ring of six tubular capillaries CAP. Each of the tubular capillaries CAP acts as an anti-resonance element.

The capillaries CAP may also be referred to as tubes. The capillaries CAP may be circular in cross section, or may have another shape. Each capillary CAP comprises a generally cylindrical wall portion WP that at least partially defines the hollow core HC of the optical fiber OF and separates the hollow core HC from a capillary cavity CC. It will be appreciated that the wall portion WP may act as an anti-reflecting Fabry-Perot resonator for radiation that propagates through the hollow core HC (and which may be incident on the wall portion WP at a grazing incidence angle). The thickness of the wall portion WP may be suitable so as to ensure that reflection back into the hollow core HC is generally enhanced whereas transmission into the capillary cavity CC is generally suppressed. In some embodiments, the capillary wall portion WP may have a thickness between 0.01 - 10.0 µm.

It will be appreciated that, as used herein, the term cladding portion is intended to mean a portion of the optical fiber OF for guiding radiation propagating through the optical fiber OF (i.e. the capillaries CAP which confine said radiation within the hollow core HC). The radiation may be confined in the form of transverse modes, propagating along the fiber axis.

The support portion is generally tubular and supports the six capillaries CAP of the cladding portion. The six capillaries CAP are distributed evenly around an inner surface if the inner support portion SP. The six capillaries CAP may be described as being disposed in a generally hexagonal formation.

The capillaries CAP are arranged so that each capillary is not in contact with any of the other capillaries CAP. Each of the capillaries CAP is in contact with the inner support portion SP and spaced apart from adjacent capillaries CAP in the ring structure. Such an arrangement may be beneficial since it may increase a transmission bandwidth of the optical fiber OF (relative, for example, to an arrangement wherein the capillaries are in contact with each other). Alternatively, in some embodiments, each of the capillaries CAP may be in contact with adjacent capillaries CAP in the ring structure.

The six capillaries CAP of the cladding portion are disposed in a ring structure around the hollow core HC. An inner surface of the ring structure of capillaries CAP at least partially defines the hollow core HC of the optical fiber OF. The diameter d of the hollow core HC (which may be defined as the smallest dimension between opposed capillaries, indicated by arrow d) may be between 10 and 1000 µm. The diameter d of the hollow core HC may affect the mode field diameter, impact loss, dispersion, modal plurality, and non-linearity properties of the hollow core HC optical fiber OF.

In this embodiment, the cladding portion comprises a single ring arrangement of capillaries CAP (which act as anti-resonance elements). Therefore, a line in any radial direction from a center of the hollow core HC to an exterior of the optical fiber OF passes through no more than one capillary CAP.

It will be appreciated that other embodiments may be provided with different arrangements of anti-resonance elements. These may include arrangements having multiple rings of anti-resonance elements and arrangements having nested anti-resonance elements. Figure 9(a) shows an embodiment of HC-PCFs with three rings of capillaries CAP stacking on top of each other along the radial direction. In this embodiment, each capillary CAP is in contact with other capillaries both in the same ring and in a different ring. Furthermore, although the embodiment shown in Figure 7 comprises a ring of six capillaries, in other embodiments, one or more rings comprising any number of anti-resonance elements (for example 4, 5, 6, 7, 8, 9, 10, 11 or 12 capillaries) may be provided in the cladding portion.

Figure 9(b) shows a modified embodiment of the above discussed HC-PCFs with a single ring of tubular capillaries. In the example of Figure 9(b) there are two coaxial rings of tubular capillaries 21. For holding the inner and outer rings of tubular capillaries 21, a support tube ST may be included in the HC-PCF. The support tube may be made of silica.

The tubular capillaries of the examples of Figure 7 and Figures 9 (a) and (b) may have a circular cross-sectional shape. Other shapes are also possible for the tubular capillaries, like elliptical or polygonal cross-sections. Additionally, the solid material of the tubular capillaries of the examples of Figure 7 and Figures 9 (a) and (b) may comprise plastic material, like PMA, glass, like silica, or soft glass.

Figure 8 depicts a radiation source RDS for providing broadband output radiation. The radiation source RDS comprises a pulsed pump radiation source PRS or any other type of source that is capable of generating short pulses of a desired length and energy level; an optical fiber OF (for example of the type shown in Figure 7) with a hollow core HC; and a working medium WM (for example a gas) disposed within the hollow core HC. Although in Figure 8 the radiation source RDS comprises the optical fiber OF shown in Figure 7, in alternative embodiments other types of hollow core HC optical fiber OF may be used.

The pulsed pump radiation source PRS is configured to provide input radiation IRD. The hollow core HC of the optical fiber OF is arranged to receive the input radiation IRD from the pulsed pump radiation source PRS, and broaden it to provide output radiation ORD. The working medium WM enables the broadening of the frequency range of the received input radiation IRD so as to provide broadband output radiation ORD.

The radiation source RDS further comprises a reservoir RSV. The optical fiber OF is disposed inside the reservoir RSV. The reservoir RSV may also be referred to as a housing, container or gas cell. The reservoir RSV is configured to contain the working medium WM. The reservoir RSV may comprise one or more features, known in the art, for controlling, regulating, and/or monitoring the composition of the working medium WM (which may be a gas) inside the reservoir RSV. The reservoir RSV may comprise a first transparent window TW1. In use, the optical fiber OF is disposed inside the reservoir RSV such that the first transparent window TW1 is located proximate to an input end IE of the optical fiber OF. The first transparent window TW1 may form part of a wall of the reservoir RSV. The first transparent window TW1 may be transparent for at least the received input radiation frequencies, so that received input radiation IRD (or at least a large portion thereof) may be coupled into the optical fiber OF located inside reservoir RSV. It will be appreciated that optics (not shown) may be provided for coupling the input radiation IRD into the optical fiber OF.

The reservoir RSV comprises a second transparent window TW2, forming part of a wall of the reservoir RSV. In use, when the optical fiber OF is disposed inside the reservoir RSV, the second transparent window TW2 is located proximate to an output end OE of the optical fiber OF. The second transparent window TW2 may be transparent for at least the frequencies of the broadband output radiation ORD of the apparatus 120.

Alternatively, in another embodiment, the two opposed ends of the optical fiber OF may be placed inside different reservoirs. The optical fiber OF may comprise a first end section configured to receive input radiation IRD, and a second end section for outputting broadband output radiation ORD. The first end section may be placed inside a first reservoir, comprising a working medium WM. The second end section may be placed inside a second reservoir, wherein the second reservoir may also comprise a working medium WM. The functioning of the reservoirs may be as described in relation to Figure 8 above. The first reservoir may comprise a first transparent window, configured to be transparent for input radiation IRD. The second reservoir may comprise a second transparent window configured to be transparent for broadband output broadband radiation ORD. The first and second reservoirs may also comprise a sealable opening to permit the optical fiber OF to be placed partially inside and partially outside the reservoir, so that a gas can be sealed inside the reservoir. The optical fiber OF may further comprise a middle section not contained inside a reservoir. Such an arrangement using two separate gas reservoirs may be particularly convenient for embodiments wherein the optical fiber OF is relatively long (for example when the length is more than 1 m). It will be appreciated that for such arrangements which use two separate gas reservoirs, the two reservoirs (which may comprise one or more features, known in the art, for controlling, regulating, and/or monitoring the composition of a gas inside the two reservoirs) may be considered to provide an apparatus for providing the working medium WM within the hollow core HC of the optical fiber OF.

In this context a window may be transparent for a frequency if at least 50%, 75%, 85%, 90%, 95%, or 99% of incident radiation of that frequency on the window is transmitted through the window.

Both the first TW1 and the second TW2 transparent windows may form an airtight seal within the walls of the reservoir RSV so that the working medium WM (which may be a gas) may be contained within the reservoir RSV. It will be appreciated that the gas WM may be contained within the reservoir RSV at a pressure different to the ambient pressure of the reservoir RSV.

The working medium WM may comprise a noble gas such as Argon, Krypton, and Xenon, a Raman active gas such as Hydrogen, Deuterium and Nitrogen, or a gas mixture such as an Argon/Hydrogen mixture, a Xenon/Deuterium mixture, a Krypton/Nitrogen mixture, or a Nitrogen/Hydrogen mixture. Depending on the type of filling gas, the nonlinear optical processes can include modulational instability (MI), soliton self-compression, soliton fission, Kerr effect, Raman effect and dispersive wave generation (DWG), details of which are described in WO2018/127266A1 and US9160137B1 (both of which are hereby incorporated by reference). Since the dispersion of the filling gas can be tuned by varying the working medium WM pressure in the reservoir RSR (i.e. gas cell pressure), the generated broadband pulse dynamics and the associated spectral broadening characteristics can be adjusted so as to optimize the frequency conversion

In one implementation, the working medium WM may be disposed within the hollow core HC at least during receipt of input radiation IRD for producing broadband output radiation ORD. It will be appreciated that, while the optical fiber OF is not receiving input radiation IRD for producing broadband output radiation, the gas WM may be wholly or partially absent from the hollow core HC.

In order to achieve frequency broadening high intensity radiation may be desirable. An advantage of having a hollow core HC optical fiber OF is that it may achieve high intensity radiation through strong spatial confinement of radiation propagating through the optical fiber OF, achieving high localized radiation intensities. The radiation intensity inside the optical fiber OF may be high, for example due to high received input radiation intensity and/or due to strong spatial confinement of the radiation inside the optical fiber OF. An advantage of hollow core optical fibers is that they can guide radiation having a broader wavelength range that solid-core fibers and, in particular, hollow core optical fibers can guide radiation in both the ultraviolet and infrared ranges.

An advantage of using a hollow core HC optical fiber OF may be that the majority of the radiation guided inside the optical fiber OF is confined to the hollow core HC. Therefore, the majority of the interaction of the radiation inside the optical fiber OF is with the working medium WM, which is provided inside the hollow core HC of the optical fiber OF. As a result, the broadening effects of the working medium WM on the radiation may be increased.

The received input radiation IRD may be electromagnetic radiation. The input radiation IRD may be received as pulsed radiation. For example, the input radiation IRD may comprise ultrafast pulses, for example, generated by a laser.

The input radiation IRD may be coherent radiation. The input radiation IRD may be collimated radiation, an advantage of which may be to facilitate and improve the efficiency of coupling the input radiation IRD into the optical fiber OF. The input radiation IRD may comprise a single frequency, or a narrow range of frequencies. The input radiation IRD may be generated by a laser. Similarly, the output radiation ORD may be collimated and/or may be coherent.

The broadband range of the output radiation ORD may be a continuous range, comprising a continuous range of radiation frequencies. The output radiation ORD may comprise supercontinuum radiation. Continuous radiation may be beneficial for use in a number of applications, for example in metrology applications. For example, the continuous range of frequencies may be used to interrogate a large number of properties. The continuous range of frequencies may for example be used to determine and/or eliminate a frequency dependency of a measured property. Supercontinuum output radiation ORD may comprise for example electromagnetic radiation over a wavelength range of 100 nm - 4000 nm. The broadband output radiation ORD frequency range may be for example 400 nm - 900 nm, 500 nm - 900 nm, or 200 nm - 2000 nm. The supercontinuum output radiation ORD may comprise white light.

The input radiation IRD provided by the pulsed pump radiation source PRS may be pulsed. The input radiation IRD may comprise electromagnetic radiation of one or more frequencies between 200 nm and 2 µm. The input radiation IRD may for example comprise electromagnetic radiation with a wavelength of 1.03 µm. The repetition rate of the pulsed radiation IRD may be of an order of magnitude of 1 kHz to 100 MHz. The pulse energies may have an order of magnitude of 0.1 µJ to 100 µJ, for example 1-10 µJ. A pulse duration for the input radiation IRD may be between 10 fs and 10 ps, for example 300 fs. The average power of input radiation IRD may be between 100 mW to several 100 W. The average power of input radiation IRD may for example be 20 - 50 W.

The pulsed pump radiation source PRS may be a laser. The spatio-temporal transmission characteristics of such a laser pulse, e.g. its spectral amplitude and phase, transmitted along the optical fiber OF can be varied and tuned through adjustment of (pump) laser parameters, working component WM variations, and optical fiber OF parameters. Said spatio-temporal transmission characteristics may include one or more of: output power, output mode profile, output temporal profile, width of the output temporal profile (or output pulse width), output spectral profile, and bandwidth of the output spectral profile (or output spectral bandwidth). Said pulsed pump radiation source PRS parameters may include one or more of: pump wavelength, pump pulse energy, pump pulse width, pump pulse repetition rate. Said optical fiber OF parameters may include one or more of: optical fiber length, size and shape of the hollow core HC, size and shape of the capillaries, thickness of the walls of the capillaries surrounding the hollow core HC. Said working component WM, e.g. filling gas, parameters may include one or more of: gas type, gas pressure and gas temperature.

The broadband output radiation ORD provided by the radiation source RDS may have an average output power of at least 1 W. The average output power may be at least 5 W. The average output power may be at least 10 W. The broadband output radiation ORD may be pulsed broadband output radiation ORD. The broadband output radiation ORD may have a power spectral density in the entire wavelength band of the output radiation of at least 0.01 mW/nm. The power spectral density in the entire wavelength band of the broadband output radiation may be at least 3 mW/nm.

Similar to other types of specialty fiber such as solid-core PCFs (SC-PCFs), hollow core PCFs (HC-PCFs) may also be manufactured using the so-called stack-and-draw technique. The manufacturing process comprises the following three major stages.

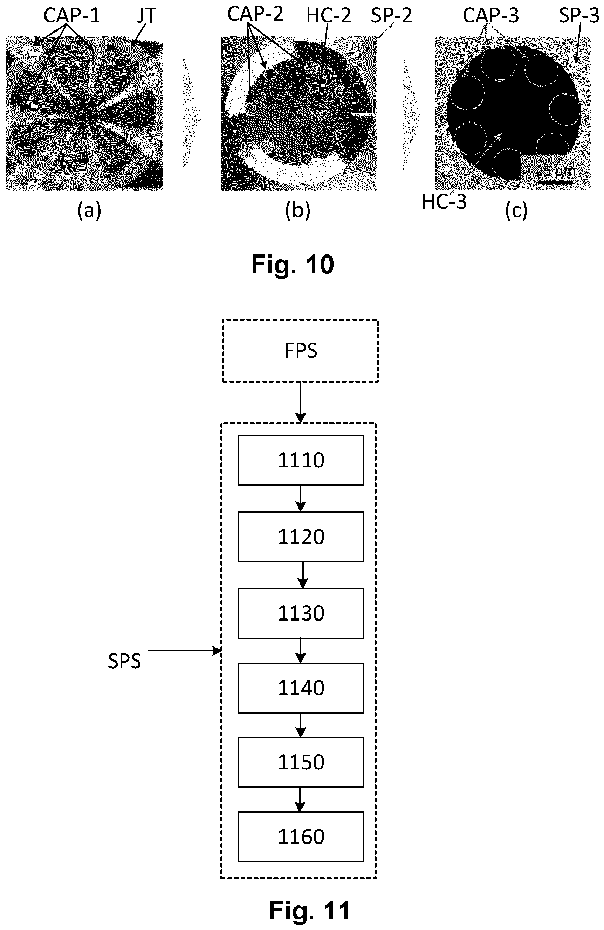

In stage 1, (pure silica) capillaries and spacers are first stacked together to form a stacked assembly. The stacked assembly is inserted into a large jacket tube (e.g., with a diameter of several centimeters) to form a preform. The gaps between the stacked assembly and the jacket tube may be filled with for example silica rods of various outer diameters. Figure 10(a) shows a transverse cross section image of an example preform. As shown in the figure, the example preform is formed by inserting a stacked assembly comprising seven capillaries CAP-1 and other elements such as spacers (not shown) into a jacket tube JT. The preform may have an outer diameter of e.g., between 10 mm - 50 mm and a length of e.g., 1 m.

In stage two, the preform is held at the top of a conventional optical fiber drawing tower where the preform is fed downward into a furnace (e.g., graphite resistance furnace) so as to heat a lower section of the preform. The heated region of the preform softens and elongates with a teardrop-shaped drip which pulls the fiber downward. Additional pulling and tension control is used to ensure the preform is drawn to a cane. Typically, a one-meter long preform can be drawn to a 10-15 m long cane. Such a long cane is then cut into shorter pieces each with a length of e.g., 1 m. Figure 10(b) shows a transverse cross section image of an example cane that is drawn from the example preform shown in Figure 10(a). The example cane comprises seven capillaries CAP-2 which surround a hollow core HC-2 and that are supported by a support portion SP-2. Although the example cane looks more like a final HC-PCF (or a target HC-PCF), it is rigid and its physical dimensions (e.g., capillary dimensions, support portion diameter) are all larger than those of the final HC-PCF. At the end of stage two, the cane may have an outer dimeter of e.g., between 1 mm - 5 mm, and the capillaries CAP that surround the hollow core HC of the cane may each have an outer diameter of e.g., between 100 µm - 500 µm and a wall portion thickness of e.g., between 1 µm - 10 µm.

In stage three, each cane obtained in stage two is then taken to another conventional optical fiber drawing tower and drawn to the final HC-PCF with target dimensions. Typically, a one-meter long cane can be drawn to hundreds of meters of fibers in a continuous manner. In its final form, the outer diameter of the HC-PCF may be reduced to e.g., between 100 µm - 200 µm. In contrast with stage two, the fiber drawing process carried out in stage three additionally requires the cane to be connected to a pressure supply which is used to pressurize the internal structures of the cane so as to cause each of the capillaries to inflate in a desired and controlled manner. By carefully tuning the relative pressure between different parts (e.g., the capillary cavities CC and hollow core HC) of the internal structures of the cane, the capillaries CAP are inflated and as such their outer diameter is increased with respect to the inner diameter of the support portion SP. This effect is evident by comparing the two transverse cross section images shown respectively in Figure 10(b) and Figure 10(c), wherein the drawn fiber shown in Figure 10(c) has a higher ratio of the outer diameter of each capillary CAP-3 over the inner diameter of the support portion SP-3. At the end of stage three, the outer diameter of the capillaries CAP may be increased to e.g., between 10 µm - 50 µm and correspondingly the thickness of the capillary wall portions WP may be reduced to e.g., 0.1 µm - 1 µm. The positive pressure difference between each capillary cavity CC and the hollow core HC may range between 10 millibar (mbar) and 500 mbar.

It is of vital importance that the capillaries are inflated in a desired manner, because 1) the capillary size (e.g., the outer diameter of each capillary) sets the size of the inscribed core which impacts the generated broadband output radiation (ORD); 2) the thickness of the capillary wall portions WP determines resonance wavelength and should correspond to wavelength not part of output spectrum fiber; since there is substantial light loss at the resonance wavelength, it is important to prevent the resonance wavelength from being present in the output spectrum so as to obtain a smoother (or less spiky) spectral profile; 3) the ratio between the capillary outer diameter and the hollow core diameter determines the light-guiding performance of the fiber.

Although the existing fiber drawing process is useful for making HC-PCFs, it generally leads to a low production yield from one preform (e.g., due to the drawn fiber not being able to meet any one of the fiber's specifications) and has appeared to be incapable of coping with the on-going demand for a broader spectral coverage and/or smoother spectral profile of the broadband output radiation ORD. For example, in stage three, the physical dimensions (e.g., the outer diameter and wall portion thickness) of the capillaries CAP are very sensitive to the pressure. A slight deviation from a required pressure level could result in the wall portion thickness and/or outer diameter being outside a specified tolerance range. A slightly higher pressure could cause the capillaries CAP to be over-inflated and consequently touch each other, thereby becoming a defective fiber. With the short wavelength edge of the output radiation ORD being continuously pushed towards the UV, the thickness of the capillary wall portions WP is desired to be further reduced so as to avoid the resonance wavelength being present in the output spectrum. The trend towards finer fiber internal structures (e.g., thinner capillary wall portions each with a thickness less than 180 nm) imposes big technical challenges (e.g., more accurate and precise pressure control/optimization) on the existing fiber drawing process and makes it impractical for manufacturing certain designs of PCFs, in particular HC-PCFs.

Furthermore, the existing fiber drawing process is a continuous fiber drawing process. During the fiber draw, the pressure applied to inflate the capillaries of the cane in stage three needs to be optimized or tuned in order to get the right capillary dimensions. This is typically conducted in a trial-and-error manner: applying a certain pressure to inflate the capillaries while drawing, cutting a sample piece and analyzing its cross-section. Once the physical dimensions of the sample fiber are confirmed to be acceptable, the inflation pressure is fixed and a batch of fiber can then be collected. This means that the first part of the cane is always lost for production and the analysis of the fiber sample is performed under a large time pressure as it is performed while the fiber is still being drawn. Insofar as the inflation pressure is still sub-optimal, the longer the analysis takes, the longer the part of the cane that will be lost. Once the optimal pressure is identified, the remaining cane will be drawn to fibers (e.g., HC-PCFs) in a continuous manner, which means that all the resultant fibers have substantially the same physical dimensions. While the existing fiber drawing process may be suitable for high volume production of certain PCFs (e.g., HC-PCFs with thicker capillary walls), it lacks the flexibility for manufacturing PCFs with different designs on a batch to batch basis.

To address the aforementioned problems, the inventors propose a method for producing PCFs (including solid-core PCFs (SC-PCFs) and HC-PCFs), comprising two major manufacturing stages: in a first fiber production stage, obtaining an intermediate PCF having an initial outer fiber diameter of less than 1.0 mm; and in a second manufacturing stage, elongating the intermediate PCF so as to controllably reduce at least one dimension of the intermediate PCF. The intermediate PCF should be interpreted broadly as a PCF fiber that is yet to have final or target dimensions. The proposed method not only allows operators to flexibly customize fiber structures for different low-volume customers but also copes well with the increasingly challenging technical requirements for manufacturing PCFs with finer internal structures (e.g., thinner capillary walls of HC-PCFs).

The proposed method may be a batch wise fiber drawing process. In contrast with the continuous fiber drawing process as described above, a batch wise process can be distinguished by its capability of drawing much shorter PCFs from a single seed fiber (e.g., the intermediate PCF). Rather than drawing hundreds of meters of fiber in one go, the batch wise process allows an intermediate PCF to be drawn to a plurality of individual shorter PCFs, each having a length of e.g., less than 10 m, less than 5 m or less, or less than 1 m. By the time the length of a drawn PCF reaches a predetermined length, the drawn PCF will be cut off from the rest of the intermediate PCF. Once the drawn PCF is cut away, a new PCF can be drawn from the same intermediate PCF. However, this time, drawing parameters can be controlled or optimized again if a PCF with different dimensions is to be drawn subsequently. Such a draw-cut-draw-cut or optimize-draw-cut-optimize-draw-cut process is unachievable by the continuous fiber drawing process.

Furthermore, the continuous fiber drawing process needs a heating zone of larger than 5 cm (e.g., typically 20 cm) and leads to an elongation factor (i.e. length of fiber out divided by length of cane in) of more than 3 (e.g., typically 100 to 1000). By comparison, in the batch wise process, the heating zone is smaller than 5 cm or smaller than 0.5 cm (e.g., typically 1 mm) and the elongation factor is less than 3 or less than 1.5 (e.g., typically 1.2). The smaller heating zone is helpful in producing finer internal fiber structures while the smaller elongation factor helps produce shorter lengths of fiber.

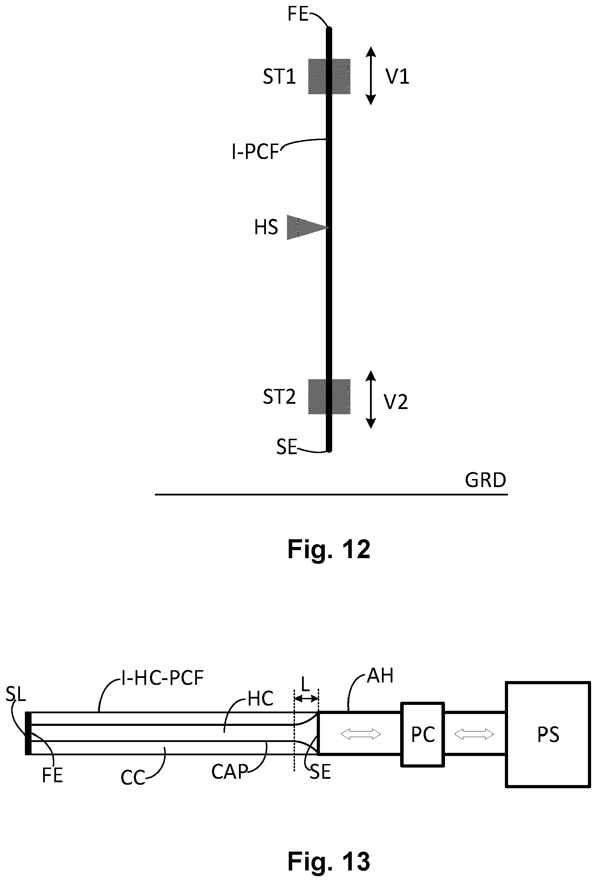

Figure 11 shows a flowchart of the method for making PCFs in accordance with an embodiment. In an implementation, the method may be used in combination with an optical fiber drawing apparatus e.g., as illustrated in Figure 12. With reference to both Figure 11 and Figure 12, the method may comprise for example the following two fiber production stages:

In a first fiber production stage FPS, an intermediate PCF may be made using the existing continuous fiber drawing process as described above.

In a second fiber production stage SPS, the intermediate PCF may be further drawn to a plurality of individual PCFs in a batch wise process. The second stage may comprise the following six steps.

At step 1110, the intermediate PCF may be mounted on a first fiber stage ST1 at or near a first end FE of the intermediate PCF and on a second fiber stage ST2 at or near a second end SE of the intermediate PCF. The position on the intermediate PCF at which the first fiber stage is mounted may be a first distance away from the first end FE, and the position on the intermediate PCF at which the second fiber stage is mounted may be a second distance away from the second end SE. The first distance and second distance each may range from 1 mm to 100 mm, for example. Once mounted, the intermediate PCF may be kept substantially straight. In a preferred implementation, the first fiber stage ST1 and second fiber stage ST2 may be arranged such that the intermediate PCF is held along a direction that is substantially perpendicular to the ground GRD (i.e., along the direction of gravity). In a different implementation, the first fiber stage ST1 and second fiber stage ST2 may be arranged such that the intermediate PCF is held in a direction that is substantially parallel to the ground GRD. In another different implementation, the two fiber stages may be arranged such that the intermediate PCF is held in a direction having a slant angle with the ground GRD. The intermediate PCF may be clamped on the first fiber stage ST1 and second fiber stage ST2 by means of e.g., two fiber clamps.

At step 1120, a first pressure may be applied, continuously and constantly, to one or more internal structures of the intermediate PCF so as to substantially maintain the internal structures during the fiber drawing process (as described in the following steps). It is known that without application of the first pressure, deformation of the internal structures may occur during the fiber drawing process.

At step 1130, at least one section of the intermediate PCF may be heated by means of a heat source HS. Once heated to around the melting temperature of e.g., 1900°C or higher (depending on the type of material of the intermediate PCF), the at least one section of the intermediate PCF may soften and elongate along the fiber drawing direction (e.g., vertical direction). The at least one section of the intermediate PCF may lie between the first and second ends of the fiber. In an implementation, the heat source HS may comprise a laser source for providing a (focused) laser beam. In other implementations, the heat source HS may comprise one or more of a plasma source for providing an arc plasma, a flame source for providing a flame, or an induction furnace.

At step 1140, the intermediate PCF may be pulled/drawn by moving the first fiber stage ST1 and the second fiber stage ST2 respectively at a first speed VI and a different second speed V2 so as to controllably reduce an outer fiber diameter of the intermediate PCF. The relative speed or speed difference between the first and second fiber stages may determine the fiber drawing speed. In an implementation, the first fiber stage ST1 may feed the intermediate PCF while the second stage may pull/draw the intermediate PCF. The two fiber stages may both move in the same direction (e.g., moving downwards or towards the ground GRD) with the first fiber stage moving at a lower speed than the second fiber stage (V1<V2). In another implementation, the first and second fiber stages may be arranged in an opposite manner, i.e. the first fiber stage being the drawing stage while the second fiber stage being the feeding stage. In another different implementation, one of the two fiber stages (e.g., the first stage ST1) may remain stationary while the other stage (e.g., the second stage ST2) may move away from the stationary stage so as to pull the fiber. In a different implementation, the first fiber stage and second fiber stage may be arranged to move in opposite directions. In such an implementation, a moveable heating source HS may be arranged to scan a plurality of times over the at least one section of the intermediate PCF. Note that, the maximum travel range of each fiber stage may impose a limitation to the maximum achievable elongation factor which in turn may limit the dimensions (e.g., the outer fiber diameter) of the intermediate PCF that can be used in the proposed method. For example, a small elongation factor of 3 or less may limit the maximum acceptable outer diameter of the intermediate fiber to be less than 1 mm

At step 1150, at least a second pressure may be applied to the one or more internal structures of the intermediate PCF so as to controllably change one or more internal dimensions of the intermediate PCF while the intermediate PCF is being drawn. In an implementation, the first pressure and the at least a second pressure may be supplied from the same pressure supply. In another implementation, the first pressure and the at least a second pressure may be supplied from two or more separate pressure supplies. In an implementation, the at least a second pressure may be applied intermittently or whenever a pressure different to the first pressure is required during the fiber draw. In another implementation, the at least a second pressure may be applied continuously during the fiber draw. In an implementation, the at least a second pressure may be kept at a constant pressure during the fiber draw. In a different implementation, the at least a second pressure may be adjusted during the fiber draw.

At step 1160, by the time the length of a drawn PCF reaches a predetermined length (e.g., 1 m), the drawn PCF will be cut off from the rest of the fiber. Once the drawn PCF is cut away, a new PCF with either the same or different dimensions can be drawn from the same intermediate PCF.

In an implementation, the intermediate PCF may be a solid-core PCF (SC-PCF) cane and its internal structures may comprise a solid core and a plurality of air holes that are distributed around the solid core. The first pressure and the at least a second pressure may both be applied directly to the plurality of air holes (or more generally gas holes, the term "air holes" is not intended to necessarily specify that a gas used is air), wherein the application of the first pressure may be to substantially maintain the internal structures of the SC-PCF (e.g., keep air holes open during the fiber draw) whereas the application of the at least a second pressure may be to controllably change the size of the solid core. In a different implementation, the intermediate PCF may be a HC-PCF cane (e.g., as shown in Figure 10(b)) and its internal structures may comprise a hollow core HC and a plurality of capillaries CAP that surround the hollow core HC. The first pressure may be applied to substantially maintain the internal structures of the HC-PCF (e.g., maintaining the ratio of the outer diameter of each capillary CAP over the inner diameter of the support portion SP and thus preventing the capillaries from deflating or even collapsing) whereas the at least a second pressure may be applied to cause the capillaries CAP to inflate with respect to the inner diameter of the support portion SP. In other implementations, it may be that only the first pressure is applied to the intermediate PCF during the entire fiber drawing process.

It will be appreciated that different fiber designs may comprise different internal structures and therefore may have different pressure requirements (e.g., pressure levels, types of pressure supply, pressure connections). For example, when manufacturing SC-PCFs, a pressure supply may be connected to a plurality of air holes of an intermediate SC-PCF so as to keep the air holes open and to controllably reduce the solid core size during fiber drawing. In such a case, the pressure supply PS may supply pressures to the air holes which may range between 1000 mbar to 2000 mbar depending on fiber design. By contrast, when manufacturing HC-PCFs, it may be possible to use pressures either lower or higher than the ambient pressure (e.g., between 900 mbar and 1000 mbar) insofar as a positive pressure difference is established between each of the capillary cavities CC and the hollow core HC of an intermediate HC-PCF. In the case where the first pressure is applied, the positive pressure difference may range between 1 mbar to 20 mbar. In the case where the at least a second pressure is applied e.g., for inflating the capillary cavities CC, the positive pressure difference may range between 20 mbar and 1000 mbar.

Figure 13 schematically depicts an example configuration for connecting a pressure supply (e.g., a vacuum pump) to an intermediate HC-PCF so as to controllably change the fiber's internal structures (e.g., capillaries). As can be seen in the figure, the pressure supply PS may comprise a vacuum pump which may be used to suck air out of an enclosure so as to create a vacuum environment. The pressure supply may be connected to the hollow core HC of the intermediate HC-PCF (I-HC-PCF) via an air hose AH.

Prior to connecting to the pressure supply PS, the intermediate HC-PCF may first undergo a sealing process in order to hermetically seal all the capillary cavities CC of the fiber. The sealing process may comprise for example 1) sealing entirely a first end FE of the intermediate HC-PCF; the hermetical sealing of the first end FE may be achieved e.g., by applying an layer of adhesive or wax which covers the entire surface of the first end FE; alternatively, the hermetical sealing of the first end FE may be achieved by heating and melting the first end; 2) heating an end portion of a second end SE of the intermediate HC-PCF so as to melt and subsequently collapse each of the capillaries CAP within the heated end portion. The end portion may begin from the second end SE and may have a length L ranging from for example 1 mm to 100 mm. After the sealing process, each of the capillary cavities CC may be fully closed and may comprise a gas at a constant pressure substantially close to the ambient pressure (e.g., between 900 mbar and 1000 mbar).

Following the sealing process, the hollow core HC of the intermediate HC-PCF may be connected to the air hose AH in an airtight manner. The pressure of the hollow core HC may be precisely controlled by a pressure controller PC that regulates the air flow between the pressure supply PS and the fiber. The use of the vacuum pump as the pressure supply PS allows a vacuum or a negative pressure to be formed inside the hollow core HC and hence a positive pressure difference established between each of the closed capillary cavities CC and the hollow core HC. As mentioned above, the positive pressure difference may result in inflation of each of the closed capillaries and thus changes in their physical dimensions. Note that the pressure connection shown in Figure 13 is only a non-limiting example. Other different configurations are equally applicable. For example, the pressure supply PS may be connected to one end (e.g., the second end SE) of a vertically held intermediate PCF (e.g., as shown in Figure 12) e.g., by means of a bendable air hose AH. In such a case and referring back to Figure 12, the pressure controller may be used to precisely control the negative pressure in the hollow core HC which effectively controls the inflation pressure subjected by each of the closed capillaries during the fiber drawing process.

In other implementations, the pressure supply may comprise a gas pressure supply which pumps a gas (e.g., air) directly into each of the capillaries. In those cases, only one end of the capillaries may need to be closed.

Referring back to Figure 11, the intermediate PCF may be produced by going through part of the existing fiber drawing process. For example, when manufacturing HC-PCFs, the making of the intermediate PCF may involve all three stages of the existing fiber drawing process, i.e. the intermediate PCF may be drawn from a PCF cane that is drawn from a preform.

In some implementations, the capillaries of the drawn fiber (i.e. the intermediate PCF) may be under-inflated (or not fully inflated). In other words, the physical dimensions of the capillaries of the drawn fiber may still be different to designed/target dimensions. The diameter of the capillaries may be for example 50% - 90% of designed capillary dimensions. The thickness of the capillary wall portions WP may be 1 - 2 times larger than a designed wall portion thickness. Since the inflation of the capillaries and the drawing of the fiber can be independently controlled, other fiber dimensions (e.g., the outer diameter) of the drawn fiber or the intermediate PCF may either fall within design tolerances or still be different to the designed dimensions. If only the capillary dimensions are different to the designed dimensions, the second fiber production stage of the proposed method may be used to further inflate the capillaries while substantially maintaining the other dimensions (e.g., the outer diameter) of the fiber. Otherwise, the second fiber production stage of the proposed method may be used to further draw and inflate the intermediate fiber until its final dimensions meet the dimension targets.

In other implementations, the intermediate fiber may be drawn from a cane using drawing and inflating (or pressurizing) parameters optimized for obtaining final fiber dimensions. However, the drawing process may be controllably terminated prior to the final fiber dimensions being reached. The intermediate PCF produced in such a manner may be regarded as a scaled-up or "magnified" version of the final fiber, wherein some or all of the fiber dimensions (e.g., outer fiber diameter, capillary diameter, wall portion thickness) may be 1.5 - 2 times larger than the final fiber dimensions. The intermediate PCF may then go through the second production stage of the proposed method, wherein the intermediate PCF may be drawn to the final fiber without needing to further inflate the capillary cavities (e.g., without performing step 1150 shown in Figure 11).

In different implementations, the intermediate PCF may comprise a PCF (e.g., a HC-PCF) that is already useful for generating the broadband output radiation ORD. The second fiber production stage of the proposed method may be used to taper at least one selected part of the intermediate PCF so as to further improve output characteristics (e.g., spectral coverage, spectral profile) of the broadband output radiation ORD. A tapered fiber may comprise a waist section comprising a tapering-down section where the fiber diameter is reduced, a central region of constant diameter and a tapering-up section where the fiber diameter is increased to the original diameter. The length of the taper waist section can extend from e.g., a few millimeters to several tens of centimeters. The taper waist section with a longer length of e.g., 10s of meters, may be possible if the fiber parameters are varied during fiber drawing. With reference to Figure 12, precise control of the extension of the heated area during the elongation process allows production of arbitrary taper profiles and waist lengths. Hollow core HC optical fibers OF (e.g., HC-PCFs) may be tapered in an adiabatic manner such that propagation of the fundamental mode is substantially maintained through the tapered fiber. Although it is also possible to implement fiber tapering in the existing fiber drawing process, the fiber tapering needs to be applied to the whole fiber rather than one or more selected parts of the fiber as allowed by the proposed method. Therefore, the proposed method provides a more flexible and easier way for manufacturing different customized fiber structures.

It will be appreciated that the proposed method may also be applicable for the cases where the capillaries of the intermediate PCF have been over-inflated. For example, in some implementations and referring back to Figure 13, the pressure supply PS may apply the at least a second pressure to the hollow core HC of the fiber so as to form a (e.g., positive) pressure difference between each of the closed capillary cavities CC and the hollow core HC. Such a pressure difference may be slightly reduced with respect to that established by the first pressure used for substantially maintaining the fiber's internal structures. The reduced pressure difference may result in deflation of the capillary cavities.

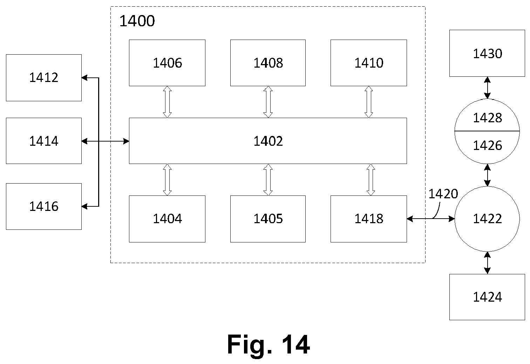

Figure 14 is a block diagram that illustrates a computer system 1400 that may assist in implementing the methods and flows disclosed herein. Computer system 1400 includes a bus 1402 or other communication mechanism for communicating information, and a processor 1404 (or multiple processors 1404 and 1405) coupled with bus 1402 for processing information. Computer system 1400 also includes a main memory 1406, such as a random access memory (RAM) or other dynamic storage device, coupled to bus 1402 for storing information and instructions to be executed by processor 1404. Main memory 1406 also may be used for storing temporary variables or other intermediate information during execution of instructions to be executed by processor 1404. Computer system 1400 further includes a read only memory (ROM) 1408 or other static storage device coupled to bus 1402 for storing static information and instructions for processor 1404. A storage device 1410, such as a magnetic disk or optical disk, is provided and coupled to bus 1402 for storing information and instructions.

Computer system 1400 may be coupled via bus 1402 to a display 1412, such as a cathode ray tube (CRT) or flat panel or touch panel display for displaying information to a computer user. An input device 1414, including alphanumeric and other keys, is coupled to bus 1402 for communicating information and command selections to processor 1404. Another type of user input device is cursor control 1416, such as a mouse, a trackball, or cursor direction keys for communicating direction information and command selections to processor 1404 and for controlling cursor movement on display 1412. This input device typically has two degrees of freedom in two axes, a first axis (e.g., x) and a second axis (e.g., y), that allows the device to specify positions in a plane. A touch panel (screen) display may also be used as an input device.

One or more of the methods as described herein may be performed by computer system 1400 in response to processor 1404 executing one or more sequences of one or more instructions contained in main memory 1406. Such instructions may be read into main memory 1406 from another computer-readable medium, such as storage device 1410. Execution of the sequences of instructions contained in main memory 1406 causes processor 1404 to perform the process steps described herein. One or more processors in a multi-processing arrangement may also be employed to execute the sequences of instructions contained in main memory 1406. In an alternative embodiment, hard-wired circuitry may be used in place of or in combination with software instructions. Thus, the description herein is not limited to any specific combination of hardware circuitry and software.

The term "computer-readable medium" as used herein refers to any medium that participates in providing instructions to processor 1404 for execution. Such a medium may take many forms, including but not limited to, non-volatile media, volatile media, and transmission media. Non-volatile media include, for example, optical or magnetic disks, such as storage device 1410. Volatile media include dynamic memory, such as main memory 1406. Transmission media include coaxial cables, copper wire and fiber optics, including the wires that comprise bus 1402. Transmission media can also take the form of acoustic or light waves, such as those generated during radio frequency (RF) and infrared (IR) data communications. Common forms of computer-readable media include, for example, a floppy disk, a flexible disk, hard disk, magnetic tape, any other magnetic medium, a CD-ROM, DVD, any other optical medium, punch cards, paper tape, any other physical medium with patterns of holes, a RAM, a PROM, and EPROM, a FLASH-EPROM, any other memory chip or cartridge, a carrier wave as described hereinafter, or any other medium from which a computer can read.

Various forms of computer readable media may be involved in carrying one or more sequences of one or more instructions to processor 1404 for execution. For example, the instructions may initially be borne on a magnetic disk of a remote computer. The remote computer can load the instructions into its dynamic memory and send the instructions over a telephone line using a modem. A modem local to computer system 1400 can receive the data on the telephone line and use an infrared transmitter to convert the data to an infrared signal. An infrared detector coupled to bus 1402 can receive the data carried in the infrared signal and place the data on bus 1402. Bus 1402 carries the data to main memory 1406, from which processor 1404 retrieves and executes the instructions. The instructions received by main memory 1406 may optionally be stored on storage device 1410 either before or after execution by processor 1404.

Computer system 1400 also preferably includes a communication interface 1418 coupled to bus 1402. Communication interface 1418 provides a two-way data communication coupling to a network link 1420 that is connected to a local network 1422. For example, communication interface 1418 may be an integrated services digital network (ISDN) card or a modem to provide a data communication connection to a corresponding type of telephone line. As another example, communication interface 1418 may be a local area network (LAN) card to provide a data communication connection to a compatible LAN. Wireless links may also be implemented. In any such implementation, communication interface 1418 sends and receives electrical, electromagnetic or optical signals that carry digital data streams representing various types of information.

Network link 1420 typically provides data communication through one or more networks to other data devices. For example, network link 1420 may provide a connection through local network 1422 to a host computer 1424 or to data equipment operated by an Internet Service Provider (ISP) 1426. ISP 1426 in turn provides data communication services through the worldwide packet data communication network, now commonly referred to as the "Internet" 1428. Local network 1422 and Internet 1428 both use electrical, electromagnetic or optical signals that carry digital data streams. The signals through the various networks and the signals on network link 1420 and through communication interface 1418, which carry the digital data to and from computer system 1400, are exemplary forms of carrier waves transporting the information.

Computer system 1400 may send messages and receive data, including program code, through the network(s), network link 1420, and communication interface 1418. In the Internet example, a server 1430 might transmit a requested code for an application program through Internet 1428, ISP 1426, local network 1422 and communication interface 1418. One such downloaded application may provide for one or more of the techniques described herein, for example. The received code may be executed by processor 1404 as it is received, and/or stored in storage device 1410, or other non-volatile storage for later execution. In this manner, computer system 1400 may obtain application code in the form of a carrier wave.

Although specific reference may be made in this text to the use of lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

Further embodiments are disclosed in the list of numbered clauses below:
1. A method of producing photonic crystal fibers (PCFs), comprising: obtaining an intermediate PCF having an initial outer fiber diameter of less than 1.0 mm; and elongating the intermediate PCF so as to controllably reduce at least one dimension of the intermediate PCF.
2. The method according to clause 1, wherein the obtaining of the intermediate PCF comprises producing the intermediate PCF from a cane using a conventional fiber drawing process.
3. The method according to clause 1 or 2, wherein the initial outer fiber diameter of said intermediate PCF prior to the elongating step is less than 0.4 mm.
4. The method according to any preceding clause, wherein the elongating step is performed on a length of the intermediate PCF, such that the elongated intermediate PCF is less than 10 m.
5. The method according to any of clauses 1 to 3, wherein said elongating step or is performed on a length of the intermediate PCF, such that the elongated intermediate PCF is less than 5 m.
6. The method according to any of clauses 1 to 3, wherein said elongating step is performed on a length of the intermediate PCF, such that the elongated intermediate PCF is less than 1 m.
7. The method according to any preceding clause, wherein the elongating step comprises repetitions of: drawing a length of said intermediate PCF to reduce at least one dimension of the said length; and cutting said length from the intermediate PCF when drawn.
8. The method according to clause 7, wherein the step of individually drawing a length is performed such that the length of each individually drawn PCF is less than 10 m prior to said cutting step.
9. The method according to clause 7, wherein the step of individually drawing a length is performed such that the length of each individually drawn PCF is less than 5 m prior to said cutting step.
10. The method according to clause 7, wherein the step of individually drawing a length is performed such that the length of each individually drawn PCF is less than 1 m prior to said cutting step.
11. The method according to any preceding clause, wherein said elongating step comprises heating the intermediate PCF, said heating being performed over a heating zone on the intermediate PCF no larger than 5cm.
12. The method according to any preceding clause, wherein said elongating step comprises heating the intermediate PCF, said heating being performed over a heating zone on the intermediate PCF no larger than 0.5cm.
13. The method according to any preceding clause, wherein said heating is performed by application of a laser beam.
14. The method according to any preceding clause, wherein said elongating step elongates the intermediate PCF by no more than 3 times.
15. The method according to any preceding clause, wherein said elongating step elongates the intermediate PCF by no more than 1.5 times.
16. The method according to any preceding clause, wherein the elongating step comprises mounting the intermediate PCF on a first stage at or near a first end of the intermediate PCF and on a second stage at or near a second end of the intermediate PCF.
17. The method according to clause 16, wherein the elongating step further comprises heating at least one intermediate section of the intermediate PCF, the at least one intermediate section of the intermediate PCF being comprised between the position on said intermediate PCF at which the first stage is mounted and the position on said intermediate PCF at which the second stage is mounted.
18. The method according to clause 17, wherein the elongating step further comprises moving at least one of the first stage and the second stage such that the first stage and the second stage are at respective different speeds.
19. The method according to clause 18, wherein said moving step comprises moving the first stage at a first speed and moving the second stage at a second speed.
20. The method according to clause 19, wherein said moving step further comprises moving the first stage so as to feed the intermediate PCF while moving the second stage so as to pull the intermediate PCF, wherein both stages are moved along the same direction and the first speed is less than the second speed.
21. The method according to clause 18 or 19, wherein said moving step further comprises moving the first stage and the second stage in opposite directions.
22. The method according to clause 21, wherein said moving step further comprises heating back and forth over the at least one intermediate section of the intermediate PCF.
23. The method according to any of clauses 18 or 19, wherein said moving step comprises keeping one of the first stage and second stage substantially stationary while moving the other stage from the stationary stage.
24. The method according to any of clauses 18 to 23, wherein said moving step is performed until at least one waist section is formed on the intermediate PCF.
25. The method according to any preceding clause, wherein the elongating step comprises applying at least one pressure to one or more internal structures of the intermediate PCF so as to controllably change one or more internal dimensions of the intermediate PCF with respect to its outer fiber diameter while performing the elongating step.
26. The method according to clause 25, wherein the intermediate PCF comprises an intermediate hollow-core PCF (HC-PCF) which comprises a body having a hollow core surrounded by a plurality of capillaries, wherein each capillary encloses a capillary cavity formed by a wall portion of each of the plurality of capillaries and the first and second ends of the intermediate HC-PCF.
27. The method according to clause 26, wherein the step of applying the at least one pressure to one or more internal structures of the intermediate PCF comprises applying at least one pressure to the hollow core of the intermediate HC-PCF.
28. The method according to clause 26, wherein the step of applying the at least one pressure to one or more internal structures of the intermediate PCF comprises applying at least one pressure to each of the plurality of capillaries of the intermediate HC-PCF.
29. The method according to any of clauses 27 or 28, wherein the step of applying the at least one pressure to one or more internal structures of the intermediate PCF further comprises hermetically sealing the first end of the intermediate HC-PCF prior to the step of applying the at least one pressure to the intermediate HC-PCF.
30. The method according to clause 29, wherein the hermetical sealing of the first end of the intermediate HC-PCF comprises at least one of: applying an adhesive to cover a surface of the first end of the intermediate HC-PCF; applying a wax to cover a surface of the first end of the intermediate HC-PCF; or melting the first end of the intermediate HC-PCF.
31. The method according to clause 29 or 30, wherein the step of applying the at least one pressure to one or more internal structures of the intermediate PCF further comprises heating the second end of the intermediate HC-PCF so as to collapse a portion of the plurality of capillaries at the second end and consequently form a plurality of closed capillary cavities.
32. The method according to clause 31, wherein the step of applying the at least one pressure to one or more internal structures of the intermediate PCF further comprises connecting the second end of the hollow core of the intermediate HC-PCF to a pressure supply so as to apply at least one pressure to the hollow core so as to establish at least one pressure difference between each of the plurality of closed capillary cavities and the hollow core so as to inflate, substantially maintain or deflate the plurality of closed capillary cavities.
33. The method according to clause 32, wherein the absolute value of the at least one pressure difference between each of the plurality of closed capillary cavities and the hollow core ranges from 20 mbar to 1000 mbar.
34. The method according to any of clauses 26 to 33, wherein the step of applying at least one pressure is performed to controllably reduce a thickness of the wall portion of each of the plurality of capillaries to 200 nm or less.
35. The method according to any of clauses 26 to 33, wherein the step of applying at least one pressure is performed to controllably reduce a thickness of the wall portion of each of the plurality of capillaries to 100 nm or less.
36. The method according to any of clauses 26 to 33, wherein the step of applying at least one pressure is performed to controllably change an outer diameter of each of the plurality of capillaries to 10 µm or more.
37. The method according to any of clauses 26 to 33, wherein the step of applying at least one pressure is performed to controllably change an outer diameter of each of the plurality of capillaries to 19 µm or more.
38. The method according to clause 25, wherein the intermediate PCF comprises an intermediate solid-core PCF (SC-PCF) which comprises a body having a solid core surrounded by a plurality of gas holes.
39. The method according to clause 38, wherein the step of applying the at least one pressure to one or more internal structures of the intermediate PCF comprises applying at least one pressure to each of the plurality of gas holes of the intermediate SC-PCF so as to keep the plurality of gas holes open and to reduce a diameter of the solid core.
40. The method according to any preceding clause, wherein said elongating step is performed until the outer fiber diameter of the elongated intermediate PCF is 200 µm or less.
41. The method according to any preceding clause, wherein said elongating step is performed until the outer fiber diameter of the elongated intermediate PCF is 100 µm or less.
42. A method of producing photonic crystal fibers (PCFs) comprising: obtaining an intermediate PCF; and producing a plurality of PCFs from the intermediate PCF, wherein each PCF is produced by repetitions of: drawing a length of said intermediate PCF to reduce at least one dimension of the said length; and cutting said length from the intermediate PCF when drawn.
43. The method according to clause 42, wherein the step of obtaining the intermediate PCF comprises producing the intermediate PCF from a cane using a conventional fiber drawing process.
44. The method according to clause 42 or 43, wherein the outer fiber diameter of the intermediate PCF prior to said step of individually drawing a length is less than 1.0 mm
45. The method according to any of clauses 42 to 44, wherein the outer fiber diameter of the intermediate PCF prior to said step of individually drawing a length is less than 0.4 mm.
46. The method according to any of clauses 42 to 45, wherein the step of drawing a length is performed such that the length of each individually drawn PCF is less than 45 m prior to said cutting step.
47. The method according to any of clauses 42 to 45, wherein the step of drawing a length is performed such that the length of each individually drawn PCF is less than 5 m prior to said cutting step.
48. The method according to any of clauses 42 to 45, wherein the step of drawing a length is performed such that the length of each individually drawn PCF is less than 1 m prior to said cutting step.
49. The method according to any of clauses 42 to 48, wherein said step of drawing a length comprises heating the intermediate PCF, said heating being performed over a heating zone on the intermediate PCF no larger than 5cm.
50. The method according to any of clauses 42 to 49, wherein said step of drawing a length comprises heating the intermediate PCF, said heating being performed over a heating zone on the intermediate PCF no larger than 0.5cm.
51. The method according to any of clauses 42 to 50, wherein said heating is performed by application of a laser beam.
52. The method according to any of clauses 42 to 51, wherein said step of drawing a length elongates the intermediate PCF by no more than 3 times.
53. The method according to any of clauses 42 to 52, wherein said step of drawing a length elongates the intermediate PCF by no more than 1.5 times.
54. The method according to any of clauses 42 to 53, wherein the step of drawing a length comprises mounting the intermediate PCF on a first stage at or near a first end of the intermediate PCF and on a second stage at or near a second end of the intermediate PCF.
55. The method according to clause 54, wherein the step of drawing a length further comprises heating at least one intermediate section of the intermediate PCF, the at least one intermediate section of the intermediate PCF being comprised between the position on said intermediate PCF at which the first stage is mounted and the position on said intermediate PCF at which the second stage is mounted.
56. The method according to clause 55, wherein the step of drawing a length further comprises moving at least one of the first stage and the second stage such that the first stage and the second stage are at respective different speeds.
57. The method according to clause 56, wherein said moving step comprising moving the first stage at a first speed and moving the second stage at a second speed.
58. The method according to clause 57, wherein said moving step further comprises moving the first stage so as to feed the intermediate PCF while moving the second stage so as to pull the intermediate PCF, wherein both stages are moved along the same direction and the first speed is less than the second speed.
59. The method according to clause 56 or 57, wherein said moving step further comprises moving the first stage and the second stage in opposite directions.
60. The method according to clause 59, wherein said moving step further comprises heating back and forth over the at least one intermediate section of the intermediate PCF.
61. The method according to any of clauses 56 or 57, wherein said moving step comprises keeping one of the first stage and second stage substantially stationary while moving the other stage from the stationary stage.
62. The method according to any of clauses 56 to 61, wherein said moving step is performed until at least one waist section is formed on the intermediate PCF.
63. The method according to any of clauses 42 to 52, wherein the step of drawing a length comprises applying at least one pressure to one or more internal structures of the intermediate PCF so as to controllably change one or more internal dimensions of the intermediate PCF with respect to its outer fiber diameter while performing the step of drawing a length.
64. A PCF produced using the method according to any preceding clause.

Although specific reference may be made in this text to embodiments of the invention in the context of a lithographic apparatus, embodiments of the invention may be used in other apparatus. Embodiments of the invention may form part of a mask inspection apparatus, a metrology apparatus, or any apparatus that measures or processes an object such as a wafer (or other substrate) or mask (or other patterning device). These apparatus may be generally referred to as lithographic tools. Such a lithographic tool may use vacuum conditions or ambient (non-vacuum) conditions.

Although specific reference may have been made above to the use of embodiments of the invention in the context of optical lithography, it will be appreciated that the invention, where the context allows, is not limited to optical lithography and may be used in other applications, for example imprint lithography.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

## Claims

1. A method of producing photonic crystal fibers (PCFs), comprising
obtaining an intermediate PCF having an initial outer fiber diameter of less than 1.0 mm; and
elongating the intermediate PCF so as to controllably reduce at least one dimension of the intermediate PCF.

2. The method as claimed in claim 1, wherein the obtaining of the intermediate PCF comprises producing the intermediate PCF from a cane using a conventional fiber drawing process.

3. The method as claimed in any preceding claim, wherein the elongating step is performed on a length of the intermediate PCF, such that the elongated intermediate PCF is less than 10 m.

4. The method as claimed in any preceding claim, wherein the elongating step comprises repetitions of:
drawing a length of said intermediate PCF to reduce at least one dimension of the said length; and
cutting said length from the intermediate PCF when drawn.

5. The method as claimed in claim 4, wherein the step of individually drawing a length is performed such that the length of each individually drawn PCF is less than 10 m prior to said cutting step.

6. The method as claimed in any preceding claim, wherein the elongating step comprises applying at least one pressure to one or more internal structures of the intermediate PCF so as to controllably change one or more internal dimensions of the intermediate PCF with respect to its outer fiber diameter while performing the elongating step.

7. The method as claimed in claim 6, wherein the intermediate PCF comprises an intermediate hollow-core PCF (HC-PCF) which comprises a body having a hollow core surrounded by a plurality of capillaries, wherein each capillary encloses a capillary cavity formed by a wall portion of each of the plurality of capillaries and the first and second ends of the intermediate HC-PCF.

8. The method as claimed in claim 6, wherein the step of applying the at least one pressure to one or more internal structures of the intermediate PCF comprises applying at least one pressure to the hollow core of the intermediate HC-PCF.

9. The method as claimed in claim 6, wherein the step of applying the at least one pressure to one or more internal structures of the intermediate PCF comprises applying at least one pressure to each of the plurality of capillaries of the intermediate HC-PCF.

10. The method as claimed in any preceding claim, wherein said elongating step is performed until the outer fiber diameter of the elongated intermediate PCF is 200 µm or less.

11. A method of producing photonic crystal fibers (PCFs) comprising:
obtaining an intermediate PCF; and
producing a plurality of PCFs from the intermediate PCF, wherein each PCF is produced by repetitions of:
drawing a length of said intermediate PCF to reduce at least one dimension of the said length; and
cutting said length from the intermediate PCF when drawn.

12. The method as claimed in claim 11, wherein the step of obtaining the intermediate PCF comprises producing the intermediate PCF from a cane using a conventional fiber drawing process.

13. The method as claimed in claim 11 or 12, wherein the outer fiber diameter of the intermediate PCF prior to said step of individually drawing a length is less than 1.0 mm

14. The method as claimed in any of claims 11 to 13, wherein the step of drawing a length is performed such that the length of each individually drawn PCF is less than 45 m prior to said cutting step.

15. A PCF produced using the method as claimed in any preceding claim.
